# EUROPÄISCHE PATENTSCHRIFT

(11) **EP 1 304 347 B1**
(45) Veröffentlichungstag und Bekanntmachung des Hinweises auf die Patenterteilung: **21.12.2005**
(21) Anmeldenummer: 02018990.8
(22) Anmeldetag: 27.08.2002
(51) Int. Cl.: C08J 3/215, C08K 9/06, C08L 21/00, C09C 1/30, C09C 3/12

(54) **Silikatische und/oder oxidische Füllstoffe enthaltende Kautschukgranulate**
Rubber granules containing silicates and/or oxidic fillers
Granules caoutchouteuses contenant des silicates et/ou des charges oxidiques

(30) Priorität: 18.10.2001 DE 10151430
(43) Veröffentlichungstag der Anmeldung: 23.04.2003
(73) Patentinhaber: Degussa AG, 40474 Düsseldorf (DE)
(72) Erfinder: Görl, Udo, Dr., 45657 Recklinghausen (DE); Schmitt, Matthias, 69151 Neckargemünd (DE); Stober, Reinhard, Dr., 63594 Hasselroth (DE)

(56) Entgegenhaltungen:
- EP-A- 0 900 829
- EP-A- 0 955 344
- EP-A- 1 209 193

## Beschreibung

Die Erfindung betrifft die Herstellung und Verwendung von silikatische und/oder oxidische Füllstoffe enthaltenden Kautschukpulvern oder Granulaten auf der Basis von Kautschuk-Latex-Emulsionen durch Ausfällen aus einer Wasserphase.

Über Ziel und Zweck des Einsatzes von Pulverkautschuk sowie über mögliche Verfahren zu ihrer Herstellung sind eine Vielzahl von Publikationen und Patente erschienen [1 bis 4].

Die Erklärung für das Interesse an pulverförmigen Kautschuk/Füllstoffbatches ergibt sich zwangsläufig aus der Verarbeitungstechnik in der Gummiindustrie [5]. Dort werden die Kautschukmischungen mit hohem Aufwand an Energie, Zeit und Personal hergestellt. Der Hauptgrund hierfür ist, dass der Rohstoff Kautschuk in Ballenform vorliegt und während dessen Verarbeitung große Mengen an aktiven Füllstoffen (Industrieruße, Kieselsäuren und Naturfüllstoffe) in die Kautschukphase mechanisch eingearbeitet und dispergiert werden müssen.

Dieser mechanische Knetprozess erfolgt in der Praxis batchweise, d. h. diskontinuierlich in großen Innenmischern oder auf Walzwerken, in der Regel in mehreren Verfahrensstufen.

Um diese aufwendigen Verfahrensschritte zu vereinfachen [2 bis 4] oder gar die Möglichkeit zu eröffnen, neue, kontinuierlich arbeitende Prozesse zu entwickeln und einzuführen [5, 6], wird schon seit langem die Pulverkautschuktechnologie [7] als mit am geeignetsten erachtet. Sie kombiniert die Notwendigkeit des bereits inkorporierten Füllstoffs mit der besonderen Darreichungsform eines frei fließenden und damit automatisch dosier- und förderbaren Pulvers bzw. Granulats.

Die Herstellung der Kautschukpulver/-Granulate erfolgt unabhängig vom Füllstofftyp (Ruße, Kieselsäuren, Naturfüllstoffe etc.) durch Fällung aus einem Gemisch einer Füllstoffsuspension in Wasser und einer Kautschuk-Latex-Emulsion durch pH-Wert-Absenkung mittels einer Brönsted und/oder Lewissäure [1 bis 4]. Die Herstellung kann batchweise oder auch kontinuierlich [8] erfolgen.

Die Bildung eines Kautschukpulvers/-Granulats, bestehend aus Polymer und Füllstoff, kann man sich, ausgelöst durch die Säurezugabe, als Anlagerung (Adsorption) des Kautschuks auf dem Füllstoff vorstellen. Hierbei spielt die Wechselwirkung zwischen der Füllstoffoberfläche und den Kautschukketten eine entscheidende Rolle. Die Stärke dieser Wechselwirkung wird wiederum von den Polaritätsunterschieden der beiden Ausgangsmaterialien Kautschuk und Füllstoff bestimmt.

Industrieruße und die meisten gängigen Kautschukarten gelten als unpolar, d. h. sie besitzen eine hohe Wechselwirkung zueinander, was dazu führt, dass ein Kautschukpulver/-Granulat, bestehend aus diesen beiden Komponenten, in der Regel problemlos und damit auch ohne weitere Zusätze und Maßnahmen aus der oben genanten Fällung darstellbar ist.

Silikatische und oxidische Füllstoffe hingegen sind polar. Die Wechselwirkung zwischen diesen Füllstoffen und den unpolaren Kautschukarten ist daher äußerst schwach. Um mit diesen Produkten ein Kautschukpulver/-Granulat herzustellen, ist es daher zwingend notwendig, die Wechselwirkung untereinander zu erhöhen. Dies gelingt am einfachsten durch eine Hydrophobierung der Füllstoffoberfläche mit Hilfe geeigneter Hydrophobierungsmittel. Die Füllstoffoberfläche wird hierdurch organischer und damit unpolarer, wodurch die Wechselwirkungskräfte zwischen dem Füllstoff und dem Kautschuk zunehmen. Durch diese Maßnahme, die in der Regel bei der Herstellung der Füllstoffsuspension erfolgt [9], ist es möglich, auch spezifikationsgerechte Produkte mit den oben genannten silikatischen und oxidischen Füllstoffen zu erhalten.

Zahlreiche Patentschriften und Veröffentlichungen, die diese Vorgehensweise zum Inhalt haben, sind inzwischen erschienen [9]. Diese beschreiben als Hydrophobierungsagenz die Verwendung von Organosilanen, die zusammen mit dem silikatischen oder oxidischen Füllstoff, insbesondere unter zusätzlicher Verwendung von Phasenvermittlern und Emulgatoren in Wasser suspendiert werden. Nach der Zugabe der Kautschukemulsion und anschließender Fällung durch Säurezugabe bildet sich das gewünschte Kautschukpulver als Suspension im Wasser. Nach der mechanischen Abtrennung des größten Teils des Prozesswassers wird das Produkt thermisch auf eine Restfeuchte von unter 3 % getrocknet. Bei erhöhter Temperatur reagiert das Organosilan mit der Kieselsäure unter Ausbildung von Siloxanbindungen, wobei große Mengen an Alkohol, in der Regel Ethanol, freigesetzt werden [10].

Die Verwendung von Organosilanen, insbesondere die kautschuktechnologisch bedeutenden Verbindungen Bis-(triethoxysilylpropyl)-tetra- bzw. -disulfan (TESPT bzw. TESPD) als Hydrophobierungsagenz für den Füllstoff im Kautschukpulverherstellprozess macht in diesem Zusammenhang sicherlich Sinn, da insbesondere hochkieselsäurehaltige Mischungen, wie sie seit Anfang der 90er Jahre verstärkt in PKW-Laufmischungen zum Einsatz kommen, größere Mengen an oben genannten Organosilanen enthalten [11 bis 13]. So werden mit dem Einsatz des Silans im PK-Herstellprozess letztendlich zwei Ziele erreicht. Zum einen die Herstellung der Produkte durch Erhöhung der Füllstoff/Kautschuk-Wechselwirkung (Hydrophobierung) und zum anderen die Weitergabe eines bereits silanisierten Füllstoffs im Produkt, das der Kunde ohne Gefahr weiterer Ethanolabgabe weiterverarbeiten kann. Gerade diese Eigenschaft des Produkts reduziert beim Anwender die Zahl der Probleme, die er beim heutigen Verarbeitungsprozess, der direkten Zugabe des Silans im Innnenmischer, noch zu lösen hat. Wünschenswert wäre eine deutliche Verkürzung der Mischzeit, die Vermeidung von Ethanolfreisetzungen im Mischsaal und ein verbessertes kautschuktechnologisches Wertebild.

Organosilane werden heute aufgrund ihres hohen Preises, des komplexen und zeitaufwendigen Mischprozesses [14, 15] und der Freisetzung von großen Mengen an Ethanol [16] nur dann eingesetzt, wenn das geforderte gummitechnische Wertebild ohne den Einsatz dieser Substanzen nicht eingestellt werden kann. In der Regel handelt es sich dabei um hochbeanspruchte Mischungen, wie z. B. Anwendungen im Reifensektor, speziell in der Lauffläche [11 bis 13].

Der bei weitem größte Teil der Kautschukmischungen, der helle Füllstoffe, oftmals auch Naturfüllstoffe, enthält, kommt ohne den Einsatz oder bestenfalls nur mit geringen Mengen an Organosilan aus. Beispielhaft wäre nahezu der gesamte Schuhsohlenbereich, Fußbodenbeläge, einfache Extrusionartikel, wie Profile, Bahnen, Schläuche, darüber hinaus Artikel, die im Injektion-Molding-Verfahren hergestellt werden, wie Dichtungen und Formartikel.

Helle silikatische und oxidische Füllstoffe werden in der Gummiindustrie in einer großen Typenvielfalt eingesetzt. Es sind dies die pyrogenen und gefällten Kieselsäuren und Silikate, Clays, Kieselkreiden, Kreiden, Hydroxide, wie Aluminium- und Magnesiumoxide, sowie Oxide, wie Calciumoxid, Zinkoxid, Magnesiumoxid und Titandioxid. Sämtliche dieser Füllstoffe sind, wie bereits oben erwähnt, polar und bedürfen bei der Herstellung eines Kautschukpulvers/-Granulats, unter Verwendung von wässrigen Emulsionen eines unpolaren Kautschuks, einer Hydrophobierung ihrer Oberfläche.

Unterteilt man diese Produkte nach ihrer Oberflächenchemie, so lassen sich zwei Klassen unterscheiden. Kieselsäuren, Clays und Kieselkreiden besitzen auf ihrer Oberfläche eine mehr oder weniger große Anzahl an Silanolgruppen, mit denen sich z. B. Organosilane unter Ausbildung von Siloxanbindungen umsetzen können, wodurch eine Hydrophobierung des Füllstoffs erzielt wird. Gleichzeitig stellt das entstehende Reaktionsprodukt aus Füllstoff und Silan den ersten Teilschritt innerhalb des Reaktionsablaufs eines bifunktionellen Organosilans in der Gummianwendung dar. Im weiteren Verarbeitungsprozess hin zum fertigen Gummiartikel, konkret während der Vulkanisation, erfolgt schließlich die Umsetzung der kautschukreaktiven Silanfunktion mit der Kautschukmatrix unter Aufbau von kovalenten Kautschuk/Füllstoff-Bindungen. Es sind letztendlich diese Bindungen, die es erst ermöglichen, hochaktive Kieselsäuren in hochbeanspruchten Mischungen, insbesondere im Reifensektor, einzusetzen.

Kreiden, sämtliche genannten Hydroxide und Oxide verfügen hingegen über keine bzw. aufgrund ihrer niedrigen N₂-Oberfläche nur über eine geringe Anzahl an Silanolgruppen, mit denen ein Organosilan sich chemisch unter Ausbildung einer Siloxanbindung umsetzen könnte. Folglich kommt es zu keinem Aufbau von Kautschuk/Füllstoff-Bindungen, die das Wertebild der Mischungen, die diese Füllstoffe enthalten, nennenswert verbessern könnte. Auch hier wird aus oben angegebenem Grund auf den Einsatz der Organosilane verzichtet.

Zusammenfassend läßt sich feststellen, dass für silikatische und/oder oxidische Füllstoffe enthaltende Mischungen, die zur Erreichung des geforderten Wertebilds die Bildung von Kautschuk/Füllstoff-Bindungen nicht benötigen, d. h. einfache Mischungen, nach einer preisgünstigen Alternative zu suchen ist, die lediglich hydrophobierend auf den Füllstoff wirkt und damit die Herstellung eines Kautschukpulvers ermöglicht. Bei dieser Betrachtungsweise ist es dann auch gleichgültig, inwieweit der eingesetzte Füllstoff reaktive Gruppen auf seiner Oberfläche trägt oder nicht.

Ziel der vorliegenden Erfindung ist ein Verfahren zur Herstellung von silikatische und/oder oxidische Füllstoffe enthaltenden Kautschukpulvern/-Granulaten auf Basis von wässrigen Kautschuklatex-Emulsionen, dadurch gekennzeichnet, dass man:
a) den silikatischen und/oder oxidischen Füllstoff, ein oder mehrere Hydrophobierungsagenz(ien) aus der Klasse der Polysiloxane in Mengen von 0,5 bis 7 %, insbesondere 1 bis 3 %, bezogen auf den Füllstoff, eine oder mehrere nicht ionische oberflächenaktive Tenside in Mengen von 0,1 bis 2 %, insbesondere 0,25 bis 1 %, bezogen auf den Füllstoff, bei 10 bis 60 °C, bevorzugt Raumtemperatur, in Wasser suspendiert und dabei eine Suspensionsdichte von 0,5 bis 15 %, bevorzugt 5 bis 12 %, einstellt,
b) anschließend die Kautschuklatex-Emulsion unter Rühren zur Füllstoffsuspension hinzugibt,
c) den pH-Wert des Gemischs in Wasser mittels einer Säure, bevorzugt Schwefelsäure oder Aluminiumsulfat, auf einen pH-Wert von 2,5 bis 7, bevorzugt 3,5 bis 5, absenkt,
d) das ausgefallene Kautschukpulver durch ein geeignetes Verfahren der Fest/Flüssig-Trennung vom größten Teil des Prozesswassers abtrennt,
e) den anfallenden Filterkuchen gegebenenfalls durch geeignete Maßnahmen einer Formgebung unterwirft und
f) das pulverförmige oder granulierte Produkt durch ein geeignetes Trocknungsverfahren auf eine Endfeuchte von kleiner 3 % trocknet.

Als Füllstoffhydrophobierungsagenz werden ein oder mehrere Polysiloxane der folgenden Zusammensetzung eingesetzt: 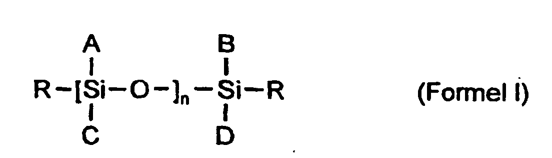
- n =: 1 - 1000
- R =: -(CH₂)ₘ-H, O-(CH₂)_{z}-H, OH, Vinyl
- m =: 1 - 4, z = 1 - 4
- m=: z oder m≠z
- A, B, C, D =: -(CH₂)ₘ-H, - O-(CH₂)_{z}-H, OH

A, B, C, D können untereinander gleich oder verschieden sein.

Die gemäß Formel I beschriebenen Verbindungen werden einzeln oder im Gemisch in Mengen von 0,5 bis 7 %, bevorzugt 1 bis 3 %, bezogen auf den Füllstoff, dem Kautschukpulverherstellungsprozess zugefügt. Die Zugabe der Verbindungen erfolgt hierbei vorteilhaft während der Herstellung der Füllstoffsuspension.

Bei den oberflächenaktiven Substanzen finden gegebenenfalls Anwendung nicht ionische Tenside aus der Gruppe der Alkoholpolyethylenglycolether, Polyethylenglycolmonomethylether, Phenolpolyethylenglycolether, Alkylphenolpolyethylenglycolether und Alkylphenolpolypropylenglycolether, alleine oder im Gemisch, in Mengen von 0,1 bis 2 %, bevorzugt 0,25 bis 1 %, bezogen auf den Füllstoff. Die Zugabe dieser Substanzen erfolgt ebenfalls vorteilhaft während der Herstellung der Füllstoffsuspension.

Als Kautschuktypen einsetzbar sind sämtliche als wässrige Emulsion darstellbare Typen, einzeln oder im Gemisch miteinander. Dabei ist es gleichgültig, inwieweit deren Herstellung (Polymerisation) direkt in Wasser durchgeführt wird und der Kautschuk damit in der Regel bereits im Wasser als Emulsion vorliegt oder der fertige Kautschuk durch geeignete Verfahren erst in Emulsion gebracht wird. Im Einzelnen kommen somit folgende wichtigen Kautschukarten in Betracht: Naturkautschuk, Emulsions-SBR mit Styrolanteilen von 10 bis 50 %, Acrylnitrilkautschuk (NBR) mit unterschiedlichen Acrylnitrilgehalten, Butyl- und Halobutylkautschuke, Ethylen-Propylen-Kautschuk mit und ohne Terkomponente (EPDM bzw. EPM), Chloroprenkautschuk, Butadienkautschuk (BR), Styrol-ButadienKautschuk nach dem Lösungspolymerisationsverfahren (L-SBR) und Isoprenkautschuke.

Der Feststoffgehalt der eingesetzten Kautschuk-Emulsionen beläuft sich im Allgemeinen auf 15 bis 65 %, bevorzugt zwischen 20 bis 30 %.

Bei den eingesetzten silikatischen und/oder oxidischen Füllstoffen handelt es sich um Produkte mit Stickstoffoberflächen von 0,5 bis 700 m²/g. Zu nennen wären u. a. pyrogene und gefällte Kieselsäuren sowie Silikate, die verschiedenen Typen von Clays, Kieselkreiden, Kreiden sowie die Hydroxide und Oxide. Die Produkte können als Teil der erfindungsgemäßen Kautschukpulver bzw. Granulate in Mengen von 10 bis 1000 Teilen, bezogen auf 100 Teile Kautschuk, eingesetzt werden. Die Füllstoffe können dabei einzeln oder im Gemisch Verwendung finden.

Neben den hellen Füllstoffen können die erfindungsgemäßen Produkte auch andere in der Gummiindustrie eingesetzte Füllstoffe enthalten. Die bekanntesten und wichtigsten hierbei sind die Industrieruße. Dazu gehören Fumace-, Gas-, Thermal- und Flammruße mit einer Jodadsorptionszahl von 5 bis 1000 m²/g, einer CTAB-Zahl von 15 bis 600 m²/g und einer DBP-Zahl von 30 bis 400 ml/100 g.

Ihr Füllgradanteil im Produkt kann zwischen 5 bis 1000 Teile, bezogen auf 100 Teile, liegen und addiert sich zum Füllgrad der hellen Füllstoffe hinzu.

Sowohl bei den hellen Füllstoffen als auch bei den Rußen ist es möglich und vorteilhaft, die Füllstoffe früh aus deren Herstellprozess abzugreifen und der Kautschukpulverherstellung zuzuführen.

Das erfindungsgemäße Verfahren beschreibt die Herstellung von Kautschukpulvern/-Granulaten, die silikatische und/oder oxidische Füllstoffe enthalten, ohne eine Hydrophobierung des Füllstoffs mittels Organosilane. Es kann jedoch in einigen Anwendungsgebieten (z. B. hochabriebfeste Sportschuhsohlen), für die die erfindungsgemäßen Produkte eingesetzt werden könnten, notwendig sein, zur Erreichung des geforderten Wertebilds zusätzlich geringe Mengen an Organosilanen dem Herstellprozess des Kautschukpulvers zuzufügen. Das Organosilan dient hier jedoch nicht primär der Herstellung des Kautschukpulvers, sondern der späteren Anwendung. Für eine Hydrophobierung des Füllstoffs als Voraussetzung für die Kautschukpulverherstellung wäre die eingesetzte Silanmenge in der Regel auch zu niedrig.

Bei den Organosiliciumverbindungen handelt es sich um Produkte der allgemeinen Formeln (II bis IV):

[R¹ ₙ₋(RO)₃₋ₙ Si-(Alk)ₘ - (Ar)p]q [B] (II),

R¹ ₙ (RO)₃₋ₙ Si- (Alkyl) (III),

oder

R¹ ₙ(RO)₃₋ₙ Si-(Alkenyl) (IV)

hergestellt,
in denen bedeuten
- B:: -SCN, -SH, -Cl, -NH2 (wenn q = 1) oder -Sx- (wenn q = 2),
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
- R:: eine C₁-C₄-Alkyl, -C₁-C₄-Alkoxygruppe, verzweigt oder nicht verzweigt,
- n:: 0; 1 oder 2,
- Alk:: einen zweiwertigen geraden oder verzweigten Kohlenstoffrest mit 1 bis 6 Kohlenstoffatomen,
- m:: 0 oder 1,
- Ar:: einen Arylenrest mit 6 bis 12 C-Atomen,
- p:: 0 oder 1 mit der Maßgabe, dass p und n nicht gleichzeitig 0 bedeuten,
- x:: eine Zahl von 2 bis 8,
- Alkyl:: einen einwertigen geraden oder verzweigten (gesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Die Verbindungen können einzeln oder im Gemisch zusammen mit den Polysiloxanen, dem Kautschukpulverherstellprozess in Mengen von 0,2 bis 5 Teilen, bevorzugt 0,5 bis 1 Teil, bezogen auf 100 Teile Kautschuk, zugegeben werden.

Die erfindungsgemäßen Kautschukpulver/-Granulate können neben den genannten Füllstoffen und Organosilanen gegebenenfalls auch weitere in der Gummiindustrie eingesetzte Mischungsbestandteile in den üblichen Mengen enthalten. Dies wären u. a. mineralische Erdölweichmacher, Zinksalze, Stearinsäure, Polyalkohole und Polyamine, Alterungsschutzmittel gegen Wärme, Licht und Sauerstoff bzw. Ozon, Wachse, Harze, Pigmente und Vernetzungschemikalien sowie Schwefel.

Die gemäß oben beschriebener Hersteilweise erhaltenen, in Wasser befindlichen Kautschukpulver werden anschließend mechanisch vom größten Teil des Prozesswassers abgetrennt. Hierfür können im Markt befindliche Verfahren angewandt werden. Als besonders vorteilhaft hat sich jedoch die Verwendung einer Kammerfilterpresse oder einer Stülpzentrifuge erwiesen.

Nach der Abtrennung des größten Teils des Prozesswassers kann es gegebenenfalls notwendig sein, den Filterkuchen einer zusätzlichen Formgebung zu unterwerfen. Hierfür haben sich marktübliche Aggregate zur Filterkuchenzerkleinerung und -granulation bewährt.

Im Abschluss erfolgt ein thermischer Trocknungsvorgang bis auf eine Restfeuchte ≤ 3 %, bevorzugt ≤ 1 %, der vorteilhaft in einer Wirbelschicht durchgeführt wird.

Die erfindungsgemäßen Kautschukpulver finden Anwendung in der Kautschukindustrie zur Herstellung von vulkanisierbaren Mischungen. Dabei können die Produkte im heutigen Verfahrensprozess (Innnenmischer, Walze) batchweise, aber auch in neuen, kontinuierlich arbeitenden Mischprozessen unter beispielhafter Verwendung von Mischextrudem [7, 17] eingesetzt werden

Darüber hinaus finden die erfindungsgemäßen Produkte zusätzliche Anwendungsgebiete im Umweltbereich [18], z. B. zur Adsorption von organischen Verunreinigungen aus Wasser bzw. Adsorption von Gasen und Dämpfen sowie im Bautensektor in Form von Dichtungsmassen [19].

### Anwendungsteil

### Eingesetzte Rohstoffe für die Herstellung der erfindungsgemäßen Kautschukpulver

- E-SBR 1500: Emulsions-Styrolbutadien-Latex mit 23,5 % Styrolgehalt (BSL)
- Ultrasil 7000: Hochdisperse Kieselsäure mit einer N₂-Oberfläche von 180 m²/g in Form ihres salzfrei gewaschenen Filterkuchens (Degussa)
- Marlipal 1618/25: Emulgator: Fettalkoholpolyethylenglycolether (Condea)
- Si69: Bis-(triethoxysilylpropyl)tetrasulfan (Degussa)
- Silikonkautsch. NG 200-80: Hydroxyendständiges Polydimethylsiloxandiol (Wacker)
- Kreide: Naturfüllstoff CaCO₃

### Herstellbeispiele

### 1. Erfindungsgemäßes Produkt auf Basis E-SBR/Ultrasil 7000 (50 phr)

### Einwaagen:

| | |
|---|---|
| 1616 g | E-SBR 1500 Emulsion (Feststoff: 21,7 %) |
| 716 g | Ultrasil 7000 Filterkuchen (Feststoff: 23,3 %) |
| 0,9 g | Marlipal 1618/25 |
| 1,75 g | Silikonkautschuk NG 200-80 |

### Versuchsdurchführung:

Ultrasil 7000 Filterkuchen, Marlipal und Silikonkautschuk werden unter Rühren mittels Ultra-Turrax in Wasser suspendiert. Die Suspensionsdichte beträgt 6 %. Anschließend fügt man die E-SBR-Emulsion hinzu und senkt den pH-Wert der Suspension auf 4,5 ab. Hierbei fällt das gewünschte Kautschukpulver aus. Es wird schließlich auf einem Büchnertrichter vom größten Teil des Wassers abgetrennt, durch einen Sieb gedrückt, dabei geformt und zum Schluss im Trockenschrank auf eine Restfeuchte von 2 % getrocknet.

Das Produkt (EPR I) fällt als frei fließendes, nicht klebendes Pulver an. Die thermogravimetrische Untersuchung (TGA) ergab einen Füllstoffgehalt von 50,7 phr.

### 2. Erfindungsgemäßes Produkt auf Basis E-SBR/Ultrasil 7000 (80 phr)/Si69 (1,5 phr)

### Einwaagen:

| | |
|---|---|
| 1559 g | E-SBR 1500 Emulsion (Feststoff: 21,7%) |
| 1058 g | Ultrasil 7000 Filterkuchen (Feststoff: 23,3 % |
| 2,6 g | Marlipal 1618/25 |
| 9,19 g | Silikonkautschuk NG 200-80 |
| 5,3 g | Si 69 |

### Versuchsdurchführung:

Ultrasil 7000 Filterkuchen, Marlipal, Silikonkautschuk und Si 69 werden unter Rühren mittels Ultra-Turrax in Wasser suspendiert. Die Suspensionsdichte beträgt 7 %. Anschließend fügt man die E-SBR-Emulsion hinzu und senkt den pH-Wert der Suspension auf 4,3 ab. Hierbei fällt das gewünschte Kautschukpulver aus. Es wird schließlich auf einem Büchnertrichter vom größten Teil des Wassers abgetrennt, durch einen Sieb gedrückt, dabei geformt und zum Schluss im Trockenschrank auf eine Restfeuchte von 2 % getrocknet.

Das Produkt (EPR II) fällt als frei fließendes, nicht klebendes Pulver an. Die thermogravimetrische Untersuchung (TGA) ergab einen Füllstoffgehalt von 78,1 phr.

### 3. Erfindungsgemäßes Produkt auf Basis E-SBR/Kreide (50 phr)

### Einwaagen:

| | |
|---|---|
| 1616 g | E-SBR 1500 Emulsion (Feststoff: 21,7%) |
| 175 g | Kreide Pulver |
| 1,7 g | Marlipal 1618/25 |
| 3,5 g | Silikonkautschuk NG 200-80 |

### Versuchsdurchführung:

Kreide, Marlipal und Silikonkautschuk werden unter Rühren mittels Ultra-Turrax in Wasser suspendiert. Die Suspensionsdichte beträgt 10 %. Anschließend fügt man die E-SBR-Emulsion hinzu und senkt den pH-Wert der Suspension auf 4,0 ab. Hierbei fällt das gewünschte Kautschukpulver aus. Es wird schließlich auf einem Büchnertrichter vom größten Teil des Wassers abgetrennt, durch einen Sieb gedrückt, dabei geformt und zum Schluss im Trockenschrank auf eine Restfeuchte von 2 % getrocknet.

Das Produkt fällt als frei fließendes, nicht klebendes Pulver an. Die thermogravimetrische Untersuchung (TGA) ergab einen Füllstoffgehalt von 52,1 phr.

### Anwendungsbeispiele

### Gummitechnische Prüfnormen:

| | |
|---|---|
| Vulkameter | DIN 53 529 |
| Mooney Viskosität | DIN 53 523 |
| Zugversuch am Ring | DIN 53 504 |
| Shore Härte | DIN 53 505 |
| Weiterreißwiderstand | ASTM D 624 |
| Abrieb | DIN 53 516 |

### 1. EPR I (E-SBR 1500/ Ultrasil 7000 50 phr) gegenüber dem entsprechenden Standard

### a) Rezeptur

| Mischungsbestandteile | Standard | EPR I |
|---|---|---|
| E-SBR 1500 | 100 | - |
| EPR I | - | 150 |
| Ultrasil 7000 GR | 50 | - |
| ZnO | 5 | 5 |
| Stearinsäure | 1 | 1 |
| PEG 4000 | 3 | 3 |
| MBTS | 1,2 | 1,2 |
| MBT | 0,7 | 0,7 |
| DPG | 0,5 | 0,5 |
| Schwefel | 2,0 | 2,0 |

### b) Mischanweisung

| Brabender 350 S; 0,345 L; Friktion 1:1,11; UPM 60, Stempel 5,5 bar | | | |
|---|---|---|---|
| **1. Stufe** | | **1. Stufe** | |
| 0 - 1' | Kautschuk | 0 - 1' | EPR I, ZnO, Stearins., PEG |
| 1 - 1,5' | ½ Kieselsäure, ZnO, | 1 - 3' | Mischen und Ausstoßen |
| | Stearins., PEG | | |
| 1,5 - 2' | ½ Kieselsäure | | |
| 2 - 3' | Mischen und Ausstoßen | | |
| Batchtemp. | 147 °C | Batchtemp. | 150 °C |

| **2. Stufe** | | **2. Stufe** | |
|---|---|---|---|
| 0 - 0,5' | Batch Stufe 1, Beschleuniger, | 0 - 0,5' | Batch Stufe 1, Beschleuni |
| | Schwefel | | ger, Schwefel |
| 0,5 - 1,5' | Mischen und Ausstoßen | 0,5 - 1,5' | Mischen und Ausstoßen |
| Batchtemp. | 105 °C | Batchtemp. | 107 °C |

### c) Kautschuktechnologisches Wertebild

| Vulkanisation: 18 min bei 165 °C | | | |
|---|---|---|---|
| Prüfmethode | Einheit | Standard | EPR I |
| ML 1+4 (100 °C) 2.St. | - | 139 | 119 |
| T 10 % | min | 1,5 | 2,4 |
| T 90 % | min | 3,5 | 5,4 |
| Zugfestigkeit | MPa | 10,2 | 13,2 |
| Modul 300 % | MPa | 3,7 | 6,3 |
| Bruchdehnung | % | 630 | 590 |
| Bruchenergie | J | 69,2 | 83,0 |
| Shore Härte | | 69 | 71 |
| Weiterreißwiderstand | | | |
| Die C | N/mm | 35 | 52 |
| Abrieb | mm³ | 200 | 177 |

Das erfindungsgemäße Produkt führt gegenüber dem Standard zu Verbesserungen in der Viskosität, den Festigkeits- und Reißwerten und dem Abrieb. Das Verstärkungsverhalten ist darüber hinaus deutlich höher. Die Verwendung von Polysiloxanen dient daher nicht nur der Herstellung der Kautschukpulver, sondern führt auch zu besseren anwendungstechnischen Daten.

### 2. EPR II (E-SBR 1500/ Ultrasil 7000 (80 phr)/Si 69 (1,5 phr) gegenüber dem entsprechenden Standard

### a) Rezeptur

| Mischungsbestandteile | Standard | EPR II |
|---|---|---|
| E-SBR 1500 | 100 | - |
| EPR II | - | 180 |
| Ultrasil 7000 GR | 80 | - |
| Si 69 | 1,5 | - |
| ZnO | 3 | 3 |
| Stearinsäure | 2 | 2 |
| 6PPD | 2,0 | 2,0 |
| Wachs | 1,0 | 1,0 |
| CBS | 1,7 | 1,7 |
| DPG | 2,0 | 2,0 |
| Schwefel | 1,5 | 1,5 |

### b) Mischanweisung

| Brabender 350 S; 0,345 L; Friktion 1:1,11; UPM 60, Stempel 5,5 bar | | | |
|---|---|---|---|
| **1. Stufe** | | **1. Stufe** | |
| 0 - 1' | Kautschuk | 0 - 1' | EPR II, ZnO, Stearins., |
| 1 - 2' | ½ Kieselsäure, ZnO, | | 6PPD, Wachs |
| | Stearins., Si 69, 6PPD, | 1 - 4' | Mischen und Ausstoßen |
| | Wachs | | |
| 2 - 3' | ½ Kieselsäure | | |
| 3 - 4' | Mischen und Ausstoßen | | |
| Batchtemp. | 144 °C | Batchtemp. | 148 °C |

| **2. Stufe** | | **2. Stufe** | |
|---|---|---|---|
| 0 - 3' | Batch Stufe 1 | 0 - 3' | Batch Stufe 1 |
| | Mischen und Ausstoßen | | Mischen und Ausstoßen |
| Batchtemp. | 142 °C | Batchtemp. | 147 °C |

| **3. Stufe** | | **3. Stufe** | |
|---|---|---|---|
| 0 - 0,5' | Batch Stufe 1, Beschleuni | 0 - 0,5' | Batch Stufe 1, Beschleuni |
| | ger, Schwefel | | ger, Schwefel |
| 0,5 - 1,5' | Mischen und Ausstoßen | 0,5 - 1,5' | Mischen und Ausstoßen |
| Batchtemp. | 101 °C | Batchtemp. | 104 °C |

### c) Kautschuktechnologisches Wertebild

| Vulkanisation: 15 min bei 165 °C | | | |
|---|---|---|---|
| Prüfmethode | Einheit | Standard | EPR II |
| T 10 % | min | 6,7 | 5,4 |
| T 90 % | min | 10,6 | 8,0 |
| Zugfestigkeit | Mpa | 14,3 | 14,5 |
| Modul 300 % | Mpa | 2,8 | 4,6 |
| Shore Härte | | 60 | 62 |
| Weiterreißwiderstand | | | |
| Die C | N/mm | 45 | 48 |
| Abrieb | mm³ | 255 | 175 |

Das erfindungsgemäße Produkt zeichnet sich durch ein erhöhtes Verstärkungsverhalten sowie durch einen deutlich besseren Abriebwiderstand aus.

### Literatur

1. WO PCT/EP 99/01970, WO PCT/EP 99/0171, EP 99 117 178.6
2. U. Görl, K.-H. Nordsiek, Kautsch. Gummi Kunstst. **51** (1998) 200
3. Rubber World 3/01 und 4/01
4. U. Görl, M. Schmitt, O. Skibba, Gummi Fasern Kunstst. **54** (2001) 532
5. E. T. Italiander, Gummi Fasern Kunstst. **50** (1997) 456
6. R. Uphus, O. Skibba, R.-H. Schuster, U. Görl, Kautsch. Gummi Kunstst. **53** (2000) 279
7. Delphi-Report, 'Künftige Herstellungsverfahren in der Gummiindustrie', Rubber J. **154** (1972) 20 und Kautsch. Gummi Kunstst. **26** (1973) 127
8. EP 00 104 112.8
9. EP 99 117 178.6, DE 100 56 696.0
10. U. Görl, M. Schmitt, Vortrag anlässlich einer DKG-Tagung in Budapest, April 2001
11. EP 0 501 227, US 5.227.425
12. U. LeMaitre, 'The Tire Rolling Resistance', AFICEP/DKG Meeting, Mulhouse, France 1993
13. G. Agostini, J. Bergh, Th. Materne, paper presented at the Akron Tire Group Technology, Akron, Ohio/USA, Oct. 1994
14. A. Hunsche, U. Görl, A. Müller, M. Knaack, Th. Göbel, Kautsch. Gummi Kunstst. **50** (1997) 881
15. A. Hunsche, U. Görl, H.G. Koban, Th. Lehmann, Kautsch. Gummi Kunstst. **51** (1998) 525
16. U. Görl, A. Parkhouse, Kautsch. Gummi Kunstst. **52** (1999) 493
17. EP 00 111 524.5
18. EP 00 110 033.8
19. DE 199 41 527.7-45

## Patentansprüche

1. Verfahren zur Herstellung von silikatische und/oder oxidische Füllstoffe enthaltenden Kautschukpulvern bzw. Granulaten auf Basis wässriger Kautschukemulsionen oder Latices,
**dadurch gekennzeichnet,**
**dass** man
a) den silikatischen und/oder oxidischen Füllstoff, ein oder mehrere Hydrophobierungsagenz(ien) aus der Klasse der Polysiloxane in Mengen von 0,5 bis 7 %, bezogen auf den Füllstoff, ein oder mehrere nicht ionische oberflächenaktive Tenside in Mengen von 0,1 bis 2 %, bezogen auf den Füllstoff, bei 10 bis 60 °C, in Wasser suspendiert und dabei eine Suspensionsdichte von 0,5 bis 15 % einstellt,
b) anschließend die Kautschuklatex-Emulsion unter Rühren zur Füllstoffsuspension hinzugibt,
c) den pH-Wert des Gemischs in Wasser mittels einer Säure, bevorzugt Schwefelsäure oder Aluminiumsulfat auf einen pH-Wert von 2,5 bis 7 absenkt,
d) das ausgefallene Kautschukpulver durch ein geeignetes Verfahren der Fest/Flüssig-Trennung vom größten Teil des Prozesswassers abtrennt,
e) den anfallenden Filterkuchen gegebenenfalls durch geeignete Maßnahmen einer Formgebung unterwirft und
f) das pulverförmige oder granulierte Produkt durch ein geeignetes Trocknungsverfahren auf eine Endfeuchte von kleiner 3 % trocknet.

2. Verfahren gemäß Anspruch 1,
**dadurch gekennzeichnet,**
**dass** man als Hydrophobierungsagenz für die hellen Füllstoffe ein oder mehrere Polysiloxane der folgenden allgemeinen Formel einsetzt: 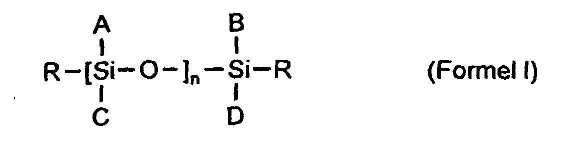
n= 1-1000
R= -(CH₂)ₘ-H, O-(CH₂)_{z}-H, OH, Vinyl
m= 1 - 4, z = 1 - 4
m= Z oder m ≠ z
A, B, C, D = -(CH₂)ₘ-H, -O-(CH₂)_{z}-H, OH
A, B, C, D können untereinander gleich oder verschieden sein.

3. Verfahren gemäß der Ansprüche 1 und 2,
**dadurch gekennzeichnet,**
**dass** die gemäß Formel I beschriebenen Verbindungen einzeln oder im Gemisch in Mengen von 0,5 bis 7 %, bezogen auf den Füllstoff, dem Kautschukpulverherstellungsprozess zugefügt werden.

4. Verfahren gemäß der Ansprüche 1 bis 3,
**dadurch gekennzeichnet,**
**dass** nicht ionische Tenside aus der Gruppe der Alkoholpolyethylenglycolether, Polyethylenglycol-monomethylether, Phenolpolyethylenglycolether, Alkylphenolpolyethylenglycolether und Alkylphenolpolypropylenglycolether alleine oder im Gemisch, in Mengen von 0,1 bis 2 %, bezogen auf den Füllstoff, während der Herstellung der Füllstoffsuspension zugegeben werden.

5. Verfahren gemäß der Ansprüche 1 bis 3, gegebenenfalls 4,
**dadurch gekennzeichnet,**
**dass** als Kautschuk sämtliche als wässrige Emulsion darstellbare Typen einzeln oder im Gemisch miteinander eingesetzt werden.

6. Verfahren gemäß der Ansprüche 1 bis 3 und 5, gegebenenfalls 4,
**dadurch gekennzeichnet,**
**dass** als helle silikatische und/oder oxidische Füllstoffe sämtliche in der Gummiindustrie verwendeten Produkte mit Stickstoffoberflächen von 0,5 bis 700 m²/g einzeln oder im Gemisch eingesetzt werden können.

7. Verfahren gemäß der Ansprüche 1 bis 3 sowie 5 und 6, gegebenenfalls 4,
**dadurch gekennzeichnet,**
**dass** bei der Herstellung der Kautschukpulver/-Granulate gegebenenfalls zusätzlich Industrieruße, hergestellt nach dem Furnace-Gas-, Thermal- und Flammrußverfahren mit einer Jodadsorptionszahl von 5 bis 1000 m²/g, einer CTAB-Zahl von 15 bis 600 m²/g und einer DBP-Zahl von 30 bis 400 ml/100 g verwendet werden

8. Verfahren gemäß der Ansprüche 1 bis 3 sowie 5 und 6, gegebenenfalls 4 und 7,
**dadurch gekennzeichnet,**
**dass** die erfindungsgemäßen Kautschukpulver/-Granulate die hellen Füllstoffe gemäß Anpruch 6 in Mengen von 10 bis 1000 Teilen, bezogen auf 100 Teile Kautschuk, und gegebenenfalls die Industrieruße gemäß Anspruch 7 in Mengen von 5 bis 1000 Teilen, bezogen auf 100 Teile Kautschuk, enthalten.

9. Verfahren gemäß der Ansprüche 1 bis 8,
**dadurch gekennzeichnet,**
**dass** dem Herstellprozess gegebenenfalls bifunktionelle, kovalente Kautschuk/Füllstoff-Bindungen aufbauende Organosilane der nachfolgenden Formeln II, III und IV einzeln oder im Gemisch in Mengen von 0,2 bis 5 Teilen, bezogen auf 100 Teile Kautschuk, zugefügt werden:
[R¹ ₙ₋(RO)₃₋ₙ Si-(Alk)ₘ - (Ar)p]q [B] (II),
R¹ ₙ(RO)₃₋ₙ Si - (Alkyl) (III),
oder
R¹ ₙ (RO)₃₋ₙ Si-(Alkenyl) (IV) (IV)
hergestellt,
in denen bedeuten
B: -SCN, -SH, -Cl, -NH2 (wenn q = 1) oder -Sx- (wenn q = 2)
R und R¹: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
R: eine C₁-C₄-Alkyl, -C₁-C₄-Alkoxygruppe, verzweigt oder nicht verzweigt,
n: 0; 1 oder 2,
Alk: einen zweiwertigen geraden oder verzweigten Kohlenstoffrest mit 1 bis 6 Kohlenstoffatomen,
m: 0 oder 1,
Ar: einen Arylenrest mit 6 bis 12 C-Atomen,
p: 0 oder 1 mit der Maßgabe, dass p und n nicht gleichzeitig 0 bedeuten,
x: eine Zahl von 2 bis 8,
Alkyl: einen einwertigen geraden oder verzweigten igesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.

10. Verfahren gemäß der Ansprüche 1 bis 9,
**dadurch gekennzeichnet,**
**dass** gegebenenfalls weitere in der Gummiindustrie eingesetzte Mischungsbestandteile, wie mineralische Erdölweichmacher, Zinksalze, Stearinsäure, Polyalkohole und Polyamine, Alterungsschutzmittel gegen Wärme, Licht und Sauerstoff bzw. Ozon, Wachse, Harze, Pigmente und Vernetzungschemikalien sowie Schwefel, in den üblichen Mengen dem Herstellprozess des erfindungsgemäßen Kautschukpulvers/-Granulats zugefügt werden.

11. Verwendung der erfindungsgemäßen Kautschukpulver bzw. Granulate, hergestellt gemäß den Ansprüchen 1 bis 10, zur Herstellung von vulkanisierbaren Kautschukmischungen.

12. Verwendung der erfindungsgemäßen Kautschukpulver bzw. Granulate, hergestellt gemäß den Ansprüchen 1 bis 10, als Adsorptions- oder Absorptionsmittel in der Umwelttechnik, insbesondere der Anlagerung von organischen Substanzen aus der Wasser- bzw. Gasphase.

13. Verwendung der erfindungsgemäßen Kautschukpulver bzw. Granulate, hergestellt gemäß den Ansprüchen 1 bis 10, als Dichtungsmassen in den verschiedenen Einsatzgebieten der Bauindustrie.

## Claims

1. A process for producing a rubber powder or, respectively, pellets based on an aqueous rubber emulsion or latex and containing a silicatic and/or oxidic filler,
**characterized in that**
a) the silicatic and/or oxidic filler, one or more hydrophobicizing agents selected from the group consisting of the polysiloxanes in amounts of from 0.5 to 7%, based on the filler, one or more non-ionic surfactants in amounts from 0.1 to 2%, based on the filler, are suspended at from 10 to 60°C in water and a suspension with solids content of from 0.5 to 15% is thus produced,
b) then the rubber latex emulsion is added to the filler suspension, with stirring,
c) an acid, preferably sulphuric acid or aluminium sulphate, is used to lower the pH of the mixture to 2.5-7 in water,
d) a suitable method of solid/liquid separation is used to isolate the precipitated rubber powder from most of the process water,
e) if desired, suitable measures are used to shape the resultant filtercake, and
f) a suitable drying process is used to dry the pulverulent or pelletized product to a final moisture level of less than 3%.

2. A process according to claim 1,
**characterized in that**
the hydrophobicizing agent used for the pale-coloured filler comprises one or more polysiloxanes of the following general, formula: 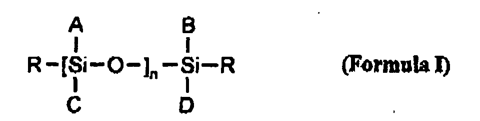
n = 1-1000
R = -(CH₂)ₘ-H, O- (CH₂)_{z}-H, OH, vinyl
m = 1-4, z = 1-4
m = z or m # z
A, B, C, - (CH₂)ₘ-H, -O- (CH₂)_{z}-H, OH
A, B, C, and D may differ from one another or be identical.

3. A process according to either of claims 1 and 2,
**characterized in that**
the compounds described by formula I are added to the rubber powder production process individually or in a mixture in amounts of from 0.5 to 7%, based on the filler.

4. A process according to any of claims 1 to 3,
**characterized in that**,
a non-ionic surfactant selected from the group consisting of the alcohol polyethylene glycol ethers, polyethylene glycol monomethyl ethers, phenol polyethylene glycol ethers, alkylphenol polyethylene glycol ethers, and alkylphenol polypropylene glycol ethers, alone or in a mixture, in amounts of from 0.1 to 2%, based on the filler, is added during the production of the filler suspension.

5. A process according to any of claims 1 to 3, or, where appropriate 4,
**characterized in that**
any of the grades which can be produced in the form of an aqueous emulsion, or a mixture of these with one another are used as the rubber.

6. A process according to any of claims 1 to 3, and 5, and, where appropriate, 4,
**characterized in that**
any of the products used in the rubber industry and having a nitrogen surface area of from 0.5 to 700 m²/g, individually or in a mixture, may be used as the pale-coloured silicatic and/or oxidic filler.

7. A process according to any of claims 1 to 3 and 5 and 6, and, where appropriate, 4
**characterized in that**
during production of the rubber powder/pellet use is also made, if desired, of an industrial carbon black produced by the furnace black, the gas black process, the thermal black process, or the flame black process, with an iodine adsorption value of from 5 to 1 000 m²/g, with a CTAB value of from 15 to 600 m²/g, and with a DBP value of from 30 to 400 ml/100 g.

8. A process according to any of claims 1 to 3, 5 and 6, and, where appropriate, 4 and 7,
**characterized in that**
the rubber powder/pellet of the invention comprises the pale-coloured filler according to claim 6 in amounts of from 10 to 1 000 parts, based on 100 parts of rubber, and, if desired, the industrial carbon black according to claim 7 in amounts of from 5 to 1 000 parts, based on 100 parts of rubber.

9. A process according to any of claims 1 to 8,
**characterized in that**,
if desired, bifunctional organosilanes which form covalent rubber/filler bonds and have the following formulae II, III, and IV are added individually or as a mixture in amounts of from 0.2 to 5 parts, based on 100 parts of rubber:
[R¹ ₙ(RO)₃₋ₙ Si-(Alk)ₘ-(Ar)p]q[B] (II),
R¹ ₙ(RO)₃₋ₙSi- (Alkyl) (III),
or
R¹ ₙ(RO)₃₋ₙSi-(Alkenyl)
where
B: is -SCN, -SH, -Cl, -NH₂ (if q = 1) or -Sₓ- (if q = 2)
R and R¹: are an alkyl group having from 1 to 4 carbon atoms, branched or unbranched, or the phenyl radical, where each radical R and R¹ may be the same or different, preferably an alkyl group,
R: is -C₁-C₄-alkyl or a -C₁-C₄-alkoxy group, branched or unbranched,
n: is 0, 1, or 2,
Alk: is a bivalent straight-chain or branched carbon radical having from 1 to 6 carbon atoms,
m: is 0 or 1,
Ar: is an arylene radical having from 6 to 12 carbon atoms,
p: is 0 or 1 with the proviso that p and n are not simultaneously 0,
x: is a number from 2 to 8,
Alkyl: is a monovalent, straight-chain or branched saturated hydrocarbon radical having from 1 to 20 carbon atoms, preferably from 2 to 8 carbon atoms, and
Alkenyl: is a monovalent, straight-chain or branched, unsaturated hydrocarbon radical having from 2 to 20 carbon atoms, preferably from 2 to 8 carbon atoms.

10. A process according to any of claims 1 to 9,
**characterized in that**,
if desired, the conventional amounts of other mixing constituents used in the rubber industry, for example mineral oil plasticizers, zinc salts, stearic acid, polyalcohols and polyamines, antioxidants for protection from heat, light, and oxygen or ozone, waxes, resins, pigments, and crosslinking chemicals, and also sulphur, are added to the process for producing the rubber powder/pellet of the invention.

11. The use of the rubber powder or, respectively, pellet of the invention, produced according to any of claims 1 to 10, for producing a vulcanizable rubber mixture.

12. The use of the rubber powder or, respectively, pellet of the invention, produced according to any of claims 1 to 10, as an adsorbent or absorbent in environmental technology, in particular for the binding of an organic substance from the aqueous or gas phase.

13. The use of the rubber powder or, respectively, pellet of the invention, produced according to any of claims 1 to 10, as a sealing compound in the various application sectors within the construction industry.

## Revendications

1. Procédé de fabrication de poudres de caoutchouc respectivement de granulats à base d'émulsions aqueuses de caoutchouc ou de latex contenant des charges silicatiques et/ou oxydiques,
**caractérisé en ce qu'**
a) on met en suspension à 10 à 60 °C dans l'eau la charge silicatique et/ou oxydique, un ou plusieurs agent(s) d'hydraphobisation de la classe des polysiloxanes dans des quantités de 0,5 à 7 %, par rapport à la charge, un ou plusieurs tensioactifs non ioniques dans des quantités de 0,1 à 2 % par rapport à la charge, et on ajuste une densité de suspension de 0,5 à 15 %,
b) on ajoute ensuite l'émulsion de latex de caoutchouc à la suspension de charge sous agitation,
c) on abaisse le pH du mélange dans l'eau à l'aide d'un acide, de préférence d'acide sulfurique ou de sulfate d'aluminium, à un pH de 2,5 à 7,
d) on sépare la poudre de caoutchouc précipitée avec un procédé approprié de séparation solide/liquide de la majeure partie de l'eau de process,
e) on façonne le cas échéant le gâteau de filtration obtenu avec des mesures appropriées, et
f) on sèche le produit pulvérulent ou granulé avec un procédé de séchage approprié à une humidité finale inférieure à 3 %.

2. Procédé selon la revendication 1,
**caractérisé en ce que**
comme réactif d'hydrophobisation pour les charges claires, on utilise un ou plusieurs polysiloxanes de formule générale suivante : 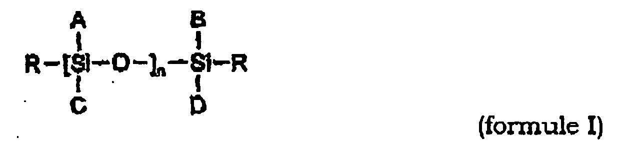
n = 1-1000
R = -(CH₂)ₘ-H, O-(CH₂)_{z}-H, OH, vinyle,
m= 1-4, z = 1-4
m = z ou m≠z
A, B, C, D = -(CH₂)ₘ-H, -O-(CH₂)_{z}-H, OH,
A, B, C, D pouvant être identiques entre eux ou différents l'un de l'autre.

3. Procédé selon les revendications 1 et 2,
**caractérisé en ce qu'**
on ajoute les composés décrits selon la formule 1 au processus de fabrication de la poudre de caoutchouc individuellement ou en mélange dans des quantités de 0,5 à 7 %, par rapport à la charge.

4. Procédé selon les revendications 1 à 3,
**caractérisé en ce qu'**
on ajoute des tensioactifs non ioniques du groupe des éthers polyéthylène glycoliques d'alcool, des éthers monométhyliques de polyéthylèxxe glycol, des éthers polyéthylène glycoliques de phénol, des éthers polyéthylène glycoliques d'alkylphénol et des éthers polypropylène glycoliques d'alkylphénol, seuls ou en mélange, dans des quantités de 0,1 à 2 % par rapport à la charge, pendant la production de la suspension de charge.

5. Procédé selon les revendications 1 à 3, le cas échéant 4,
**caractérisé en ce que**
comme caoutchouc, on utilise tous les types pouvant se présenter en tant qu'émulsion aqueuse, seuls ou en mélange les uns avec les autres.

6. Procédé selon les revendications 1 à 3 et 5, le cas échéant 4,
**caractérisé en ce qu'**
on peut utiliser, comme charges silicatiques et/ou oxydiques claires, tous les produits utilisés dans l'industrie du caoutchouc ayant des surfaces d'azote de 0,5 à 700 m²/g, seuls ou en mélange.

7. Procédé selon les revendications 1 à 3, ainsi que 5 et 6, le cas échéant 4,
**caractérisé en ce qu'**
on utilise le cas échéant en plus, lors de la fabrication de poudres/granulats de caoutchouc, des noirs de carbone industriels, fabriqués avec le procédé à gaz de fourneau, thermique et noir de lampe, avec un indice d'adsorption de l'iode de 5 à 1000 m²/g, un indice CTAB de 15 à 600 m²/g et un indice DBP de 30 à 400 ml/100 g.

8. Procédé selon les revendications 1 à 3 ainsi que 5 et 6, le cas échéant 4 et 7,
**caractérisé en ce que**
les poudres/granulats de caoutchouc selon l'invention contiennent les charges claires selon la revendication 6, dans des quantités de 10 à 1000 parties, par rapport à 100 parties de caoutchouc et, le cas échéant, les noirs de carbone industriels selon la revendication 7 dans des quantités de 5 à 1000 parties, par rapport à 100 parties de caoutchouc.

9. Procédé selon les revendications 1 à 8,
**caractérisé en ce qu'**
on ajoute au processus de fabrication, des organosilanes, établissant des liaisons caoutchouc/charge covalentes le cas échéant bifonctionnelles des formules II, III et IV ci-dessous, seuls ou en mélange dans des quantités de 0,2 à 5 parties par rapport à 100 parties de caoutchouc :
[R¹ ₙ-(RO)₃₋ₙ Si-(Alk)ₘ - (Ar)p] q [B] (II),
R¹ ₙ (RO)₃₋ₙ Si - (Alkyle) (III),
ou
R¹ ₙ (RO)₃₋ₙ Si(alcényle) (IV)
dans lesquelles
B : signifie -SCN, -SH, -Cl, -NH2 (si q = 1) ou -Sx- (si q = 2)
R et R¹ : un groupe alkyle portant 1 à 4 atomes de carbone, ramifié ou non ramifié, le radical phényle, tous les radicaux R et R¹ pouvant avoir la même signification ou une signification différente, de préférence un groupe alkyle,
R : un groupe alkyle en C₁ à C₄, un groupe alcoxy en C₁ à C₄, ramifié ou non ramifié,
n : 0, 1 ou 2,
Alk: un radical carbone bivalent, droit ou ramifié, portant 1 à 6 atomes de carbone,
m: 0 ou 1,
Ar : un radical arylène portant 6 à 12 atomes de C,
p : 0 ou 1, étant précisé que p et n ne signinent pas en même temps 0,
x : un nombre de 2 à 8,
Alkyle : un radical hydrocarbure monovalent saturé droit ou ramifié portant 1 à 20 atomes de carbone, de préférence 2 à 8 atomes de carbone,
Alcényle : un radical hydrocarbure monovalent saturé droit ou ramifié portant 2 à 20 atomes de carbone, de préférence 2 à 8 atomes de carbone.

10. Procédé selon les revendications 1 à 9,
**caractérisé en ce qu'**
on ajoute le cas échéant au processus de fabrication de la poudre/du granulat de caoutchouc selon l'invention, d'autres constituants de mélange mis en oeuvre dans l'industrie du caoutchouc comme des plastifiants minéraux à base d'huile minérale, des sels de zinc, de l'acide stéarique, des polyalcools et des polyamines, des agents anti-vieillissement contre la chaleur, la lumière et l'oxygène, respectivement l'ozone, des cires, des résines, des pigments et des produits chimiques de réticulation ainsi que du soufre, dans des quantités usuelles.

11. Utilisation des poudres respectivement des granulats de caoutchouc selon l'invention, fabriqués selon les revendications 1 à 10, pour préparer des mélanges de caoutchoucs vulcanisables.

12. Utilisation des poudres respectivement des granulats de caoutchouc selon l'invention, fabriqués selon les revendications 1 à 10, en tant qu'agents d'adsorption ou d'absorption dans l'industrie environnementale, en particulier la fixation de substances organiques provenant de phases aqueuses gazeuses.

13. Utilisation des poudres respectivement des granulats de caoutchouc selon l'invention, fabriqués selon les revendications 1 à 10, en tant que masses d'étanchéité dans les différents domaines du bâtiment.
